# EUROPEAN PATENT APPLICATION

(11) **EP 4 636 262 A1**
(43) Date of publication of application: **22.10.2025**
(21) Application number: 23903147.9
(22) Date of filing: 06.11.2023
(51) Int. Cl.: F15B 15/10, B25J 19/02

(54) **CONTACT ESTIMATION METHOD, CONTACT ESTIMATION PROGRAM, AND CONTACT ESTIMATION DEVICE**

(30) Priority: 13.12.2022 JP 2022198948
(71) Applicant: BRIDGESTONE CORPORATION, Chuo-ku Tokyo 104-8340 (JP)
(72) Inventor: SAKAMOTO, Katsuya, Tokyo 104-8340 (JP); TOZAKI, Hiroyuki, Tokyo 104-8340 (JP); JO, Taketomo, Tokyo 104-8340 (JP)
(74) Representative: Marks & Clerk LLP
(86) International application number: PCT/JP2023/039911
(87) International publication number: WO 2024/127849

(57) **Abstract**

A contact estimation method by which a computer performs processing including: acquiring actual measurement information obtained by measuring a degree of bending of a fluid pressure actuator due to a change in pressure inside the fluid pressure actuator, the fluid pressure actuator being bendable based on an inflow of a fluid; and comparing the acquired actual measurement information with reference information that specifies beforehand the degree of bending due to the change in pressure in a case in which the fluid pressure actuator is not in contact with a target object, and estimating that the fluid pressure actuator has come into contact with the target object in a case in which the actual measurement information deviates from the reference information by a predetermined amount.

## Description

### Technical Field

The present disclosure relates to a contact estimation method, a contact estimation program, and a contact estimation device.

### Background Art

As fluid pressure actuators, McKibben actuators each having a rubber tube and a sleeve (knitted with high-tension fibers) covering the outer surface of the rubber tube have been known. Such a McKibben fluid pressure actuator can change the length in the axial direction of the rubber tube and the sleeve.

Further, there is a proposed technique by which a restraining member is provided at a portion in the circumferential direction from one end side to the other end side in the axial direction of the rubber tube, so that the side of the fluid pressure actuator on which the restraining member is not provided is shortened, and is flexurally deformed (see Japanese Patent Application Laid-Open (JP-A) No. 2021-88999).

### SUMMARY OF INVENTION

### Technical Problem

Japanese Patent Application Laid-Open (JP-A) No. 2021-88999 proposes that a plurality of the fluid pressure actuators is combined, and is used as fingers for gripping a target object by flexural deformation. In this case, it is necessary to determine whether the fluid pressure actuators have come into contact with the target object.

Therefore, the disclosure aims to provide a contact estimation method, a contact estimation program, and a contact estimation device with which it is possible to estimate that a fluid pressure actuator has come into contact with a target object.

### Solution to Problem

By contact estimation method of a first aspect, a computer performs processing including: acquiring actual measurement information obtained by measuring the degree of bending of a fluid pressure actuator due to a change in pressure inside the fluid pressure actuator, the fluid pressure actuator being bendable based on an inflow of a fluid; and comparing the acquired actual measurement information with reference information that specifies beforehand the degree of bending due to the change in pressure in a case in which the fluid pressure actuator is not in contact with a target object, and estimating that the fluid pressure actuator has come into contact with the target object in a case in which the actual measurement information deviates from the reference information by a predetermined amount. Thus, by the contact estimation method, it is possible to estimate that the fluid pressure actuator has come into contact with the target object.

By a contact estimation method of a second aspect, a computer performs a process of estimating a hardness of the target object in accordance with the degree of deviation of the actual measurement information deviating from the reference information. Thus, by the contact estimation method, it is possible to estimate the hardness of the target object with which the fluid pressure actuator has come into contact.

A contact estimation program of a third aspect causes a computer to perform a process including: acquiring actual measurement information obtained by measuring the degree of bending of a fluid pressure actuator due to a change in pressure inside the fluid pressure actuator, the fluid pressure actuator being bendable based on an inflow of a fluid; and comparing the acquired actual measurement information with reference information that specifies beforehand the degree of bending due to the change in pressure in a case in which the fluid pressure actuator is not in contact with a target object, and estimating that the fluid pressure actuator has come into contact with the target object in a case in which the actual measurement information deviates from the reference information by a predetermined amount. Thus, with the contact estimation program, it is possible to estimate that the fluid pressure actuator has come into contact with the target object.

A contact estimation device of a fourth aspect includes: an acquisition unit that acquires actual measurement information obtained by measuring the degree of bending of a fluid pressure actuator due to a change in pressure inside the fluid pressure actuator, the fluid pressure actuator being bendable based on an inflow of a fluid; and an estimation unit that compares the acquired actual measurement information with reference information that specifies beforehand the degree of bending due to the change in pressure in a case in which the fluid pressure actuator is not in contact with a target object, and estimates that the fluid pressure actuator has come into contact with the target object in a case in which the actual measurement information deviates from the reference information by a predetermined amount. Thus, the contact estimation device can estimate that the fluid pressure actuator has come into contact with the target object.

### Advantageous Effects of Invention

According to the disclosure, it is possible to estimate that a fluid pressure actuator has come into contact with a target object.

### BRIEF DESCRIPTION OF DRAWINGS

Fig. 1 is an explanatory view for explaining a robot arm according to the present embodiment.
Fig. 2 is a first explanatory view for explaining a fluid pressure actuator according to the embodiment.
Fig. 3 is a diagram showing a schematic configuration of a contact estimation system according to the embodiment.
Fig. 4 is a block diagram showing the hardware configuration of a contact estimation device according to the embodiment.
Fig. 5 is a block diagram showing an example of functional components of the contact estimation device according to the embodiment.
Fig. 6 is a flowchart showing a flow of an estimation process according to the embodiment.
Fig. 7 is an explanatory diagram showing the relationship between the internal pressure in an actuator main body and the resistance value of a sensor.
Fig. 8 is a second explanatory view for explaining a fluid pressure actuator according to the embodiment.

### DESCRIPTION OF EMBODIMENTS

In the following, an example of an embodiment of the present disclosure is described, with reference to the drawings. Note that, in the drawings, the same or equivalent constituent elements and components are denoted by the same reference numerals. Further, dimensional ratios in the drawings are exaggerated for convenience sake, and might be different from actual ratios.

Note that in the following description, the "direction of the arrow X", the "direction of the arrow Y", and the "direction of the arrow Z" refer to three directions orthogonal to one another. The direction of the arrow X and the direction of the arrow Y are each a horizontal direction as an example, and the direction of the arrow Z is a vertical direction. In cases in which one side and the other side of each direction are not defined, the respective directions may sometimes be referred to as the "direction of the arrow X", the "direction of the arrow Y", and the "direction of the arrow Z".

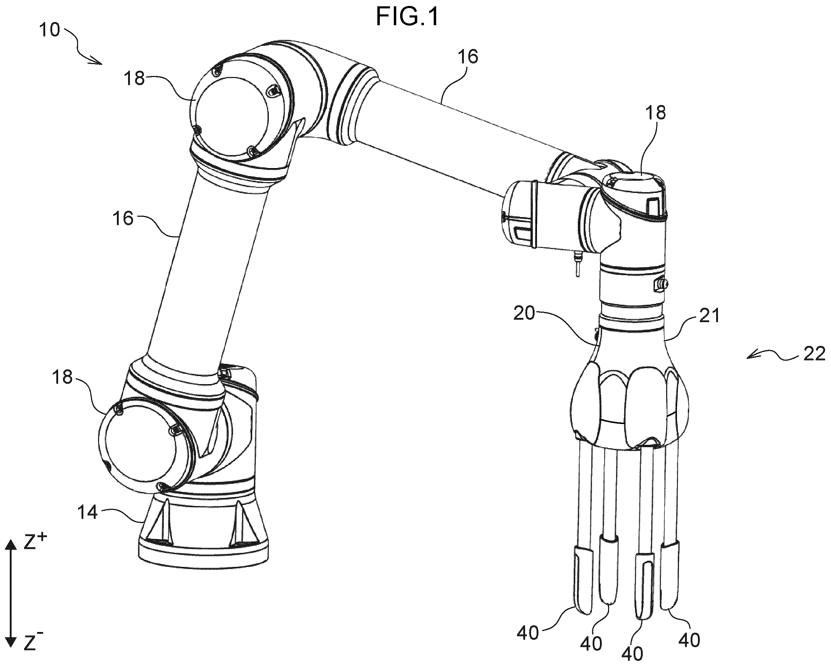

First, a robot arm 10 according to the present embodiment is described. Fig. 1 is an explanatory view for explaining the robot arm 10 according to the embodiment.

As shown in Fig. 1, the robot arm 10 includes a base 14 attached to a foundation (not shown), arm members 16, joints 18 connecting the arm members 16 to each other or an arm member 16 and the base 14, and a robot hand 20.

The robot hand 20 is attached to the distal end of the connected arm member 16 via the joint 18, and includes a support portion 21 that supports the robot hand 20. The support portion 21 includes a plurality of attachment portions 22 and a plurality of fluid pressure actuators 40. As an example, four fluid pressure actuators 40 are shown in Fig. 1. However, the number of fluid pressure actuators 40 included in the robot hand 20 is not limited to this, and may be larger or smaller than this.

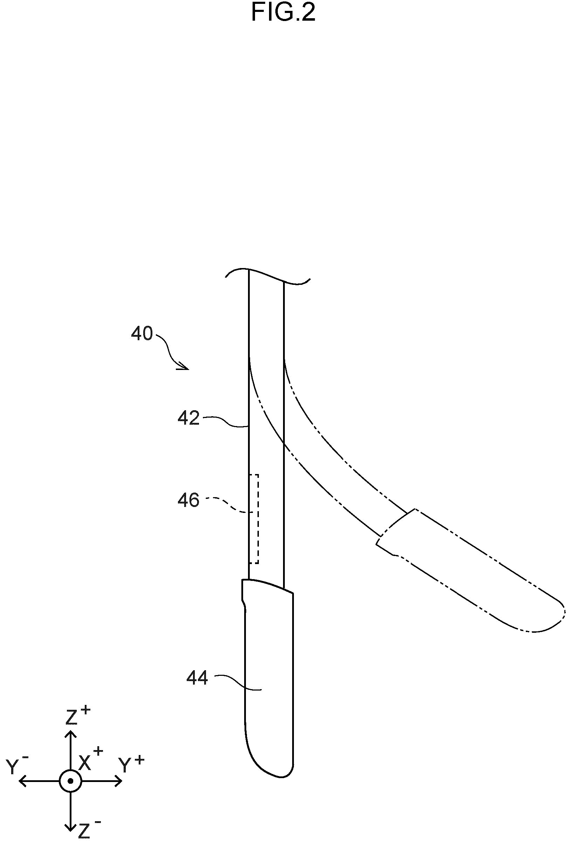

Next, a fluid pressure actuator 40 according to the embodiment is described. Fig. 2 is a first explanatory view for explaining a fluid pressure actuator 40 according to the embodiment.

As shown in Fig. 2, the fluid pressure actuator 40 is a so-called McKibben actuator, and includes an actuator main body 42 and a cap 44.

The actuator main body 42 includes a cylindrical rubber tube and a cylindrical sleeve that covers the outer periphery of the rubber tube.

The rubber tube can expand and contract with elastic deformation, and expands and contracts with change in the pressure of an internal fluid. Here, air can be used as the fluid to be supplied into the rubber tube, and, in this case, the fluid pressure actuator 40 is a pneumatic actuator.

The sleeve is a structure in which high-tension fibers are interwoven. Having such a structure, the sleeve follows expansion and contraction of the rubber tube while restricting the expansion and contraction.

Further, a restraining member is provided on the back side (the side of the direction of the arrow Y in the drawing) in the actuator main body 42, from one end side to the other end side in the direction of the arrow Z. The restraining member is formed with a material that neither expands nor contracts with pressurization, and is bendable and deformable in a direction in which the end portions approach each other. As the restraining member, a so-called leaf spring can be used.

Furthermore, a sensor 46 capable of measuring the degree of bending of the fluid pressure actuator 40 is provided on the back side in the actuator main body 42. As the sensor 46, a bend sensor that has a resistance value changing with the bend can be used. As an example, the sensor 46 is a structure that has a resistance value increasing with increase in the bend.

Here, the "back side" can also be referred to as the side not to be in contact with the target object in the fluid pressure actuator 40. Also, the opposite side of the "back side" can be referred to as the "front side". The "front side" can also be referred to as the side to be in contact with the target object in the fluid pressure actuator 40.

The cap 44 is detachably attached to the actuator main body 42 at the end (tip) of the actuator main body 42 in the direction of the arrow Z.

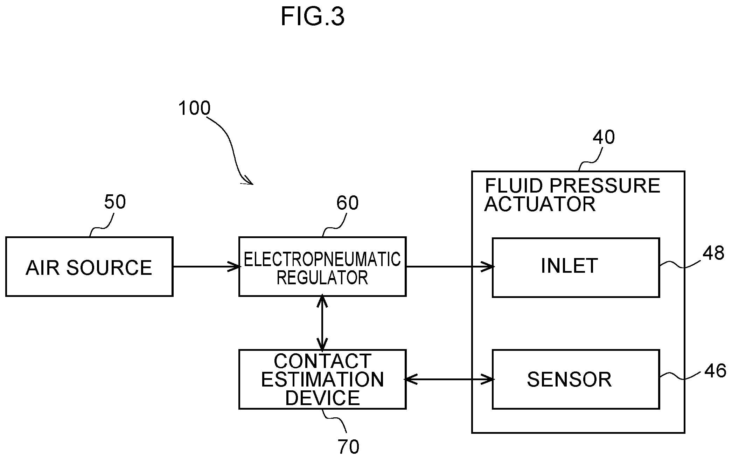

Next, a contact estimation system 100 according to the embodiment is described. Fig. 3 is a diagram showing a schematic configuration of the contact estimation system 100 according to the embodiment.

As shown in Fig. 3, the contact estimation system 100 includes the fluid pressure actuator 40, an air source 50, an electropneumatic regulator 60, and a contact estimation device 70.

The air source 50 supplies air to an inlet 48 of the fluid pressure actuator 40 via the electropneumatic regulator 60.

The electropneumatic regulator 60 controls the pressure of the air to be supplied to the fluid pressure actuator 40. The electropneumatic regulator 60 supplies the inlet 48 with air having the pressure designated by the contact estimation device 70.

The contact estimation device 70 controls the pressure of the air the electropneumatic regulator 60 is to supply to the fluid pressure actuator 40, and estimates whether the fluid pressure actuator 40 has come into contact with the target object. Here, the contact estimation system 100 includes a pressure sensor (not shown) capable of measuring the pressure inside the fluid pressure actuator 40, which is the internal pressure in the actuator main body 42.

Although the details thereof will be described later, the contact estimation device 70 estimates whether the fluid pressure actuator 40 has come into contact with the target object, on the basis of the internal pressure in the actuator main body 42 measured by the pressure sensor and the resistance value measured by the sensor 46.

Here, in a case where air flows into the inlet 48 of the fluid pressure actuator 40, the internal pressure in the actuator main body 42 rises. In the fluid pressure actuator 40, the rubber tube is elastically deformed due to the rise in the internal pressure, and a force acts in a direction in which the length of the actuator main body 42 is shortened. As the shortening of the back side of the actuator main body 42 on which the restraining member is disposed is restricted, only the front side of the actuator main body 42 is shortened. As a result, the restraining member is flexurally deformed, and the fluid pressure actuator 40 is curved as indicated by a double-dot and dash line in Fig. 2. As the actuator main body 42 is curved, the resistance value of the sensor 46 then becomes higher.

As the plurality of fluid pressure actuators 40 is curved as described above, the robot arm 10 can grip the target object.

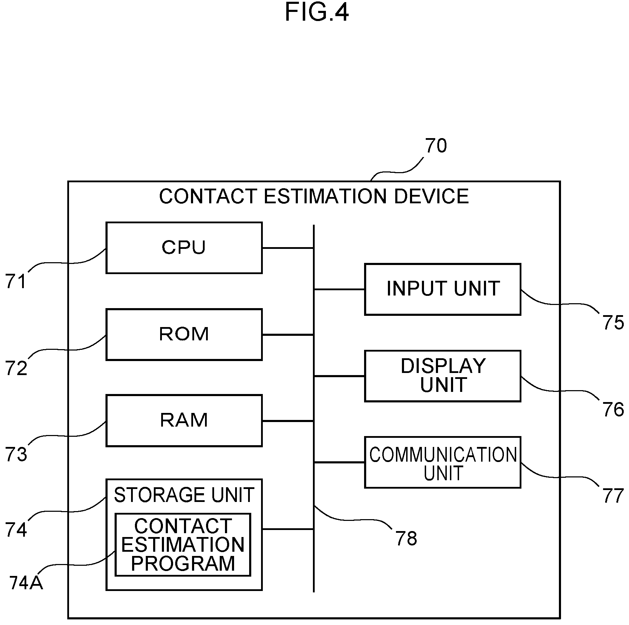

Next, the hardware configuration of the contact estimation device 70 according to the embodiment is described. Fig. 4 is a block diagram showing the hardware configuration of the contact estimation device 70 according to the embodiment. The contact estimation device 70 is a personal computer (PC) as an example.

As shown in Fig. 4, the contact estimation device 70 includes a central processing unit (CPU) 71, a read only memory (ROM) 72, a random access memory (RAM) 73, a storage unit 74, an input unit 75, a display unit 76, and a communication unit 77. The respective components are communicably connected to one another via a bus 78.

The CPU 71 is a central processing unit, and executes various programs and controls the respective components. That is, the CPU 71 reads a program from the ROM 72 or the storage unit 74, and executes the program, using the RAM 73 as a work area. The CPU 71 performs control on each of the components and various kinds of arithmetic processing, in accordance with a program recorded in the ROM 72 or the storage unit 74.

The ROM 72 stores various programs and various kinds of data. The RAM 73, as a work area, temporarily stores a program or data.

The storage unit 74 is formed with a storage device such as a hard disk drive (HDD), a solid state drive (SSD), or a flash memory, and stores various programs and various kinds of data. The storage unit 74 stores, as the various programs, a contact estimation program 74A for causing the CPU 71 to perform the estimation process described later. The storage unit 74 also stores, as the various kinds of data, reference information that specifies beforehand the degree of bending of the fluid pressure actuators 40 due to a change in the internal pressure in the actuator main body 42 in a case in which the fluid pressure actuators 40 are not in contact with the target object. As an example, the reference information includes the internal pressure in the actuator main body 42 in a predetermined range, and the resistance value of the sensor 46 that is set depending on each internal pressure in the actuator main body 42 in the predetermined range.

The input unit 75 includes a pointing device such as a mouse, a keyboard, a microphone, a camera, and the like, and is used to perform various inputs.

The display unit 76 is a liquid crystal display, for example, and displays various kinds of information. The display unit 76 may function as the input unit 75 by adopting a touch panel system.

The communication unit 77 is an interface for communicating with another device. For the communication, a wired communication standard such as Ethernet (registered trademark) or FDDI, or a wireless communication standard such as 4G, 5G, Bluetooth (registered trademark), or Wi-Fi (registered trademark) is used, for example.

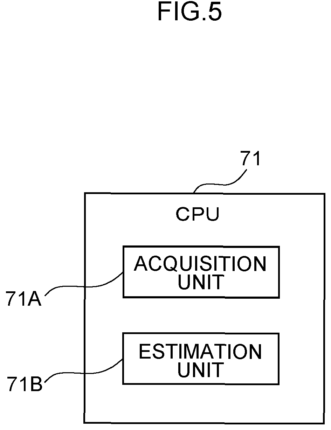

Next, functional components of the contact estimation device 70 according to the embodiment is described. Fig. 5 is a block diagram showing an example of functional components of the contact estimation device 70 according to the embodiment.

As shown in Fig. 5, the CPU 71 of the contact estimation device 70 includes an acquisition unit 71A and an estimation unit 71B as functional components. Each functional component is realized by the CPU 71 reading and executing the contact estimation program 74A stored in the storage unit 74.

The acquisition unit 71A acquires actual measurement information obtained by measuring the degree of bending of the fluid pressure actuators 40 due to a change in the internal pressure in the actuator main body 42. Specifically, the acquisition unit 71A acquires, as the actual measurement information, the current internal pressure in the actuator main body 42 being measured by the pressure sensor, and the resistance value of the sensor 46 depending on the current internal pressure.

The estimation unit 71B compares the reference information stored in the storage unit 74 with the actual measurement information acquired by the acquisition unit 71A, and estimates that the fluid pressure actuators 40 have come into contact with the target object in a case in which the actual measurement information deviates from the reference information by a predetermined amount.

The estimation unit 71B also estimates the hardness of the target object in accordance with the degree of deviation of the actual measurement information from the reference information. Note that a specific estimation method to be implemented by the estimation unit 71B will be described later.

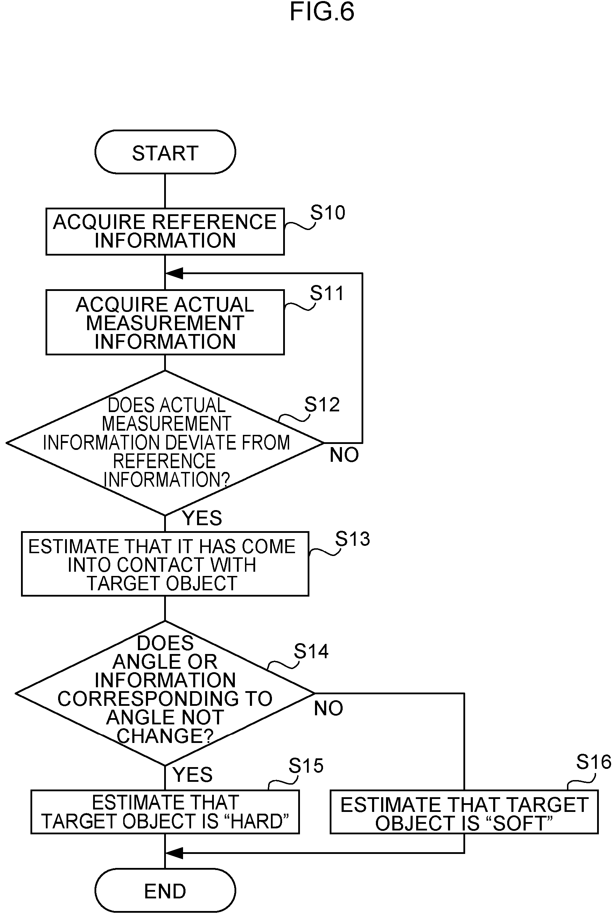

Next, a flow of a process to be performed by the contact estimation device 70 according to the embodiment. Fig. 6 is a flowchart showing a flow of an estimation process to be performed by the contact estimation device 70 according to the embodiment to estimate whether the fluid pressure actuators 40 have come into contact with the target object. The CPU 71 reads the contact estimation program 74A from the storage unit 74, loads the program into the RAM 73, and executes the program, to perform the estimation process. As an example, the estimation process is performed at the start of a gripping operation in which the robot arm 10 grips the target object with the robot hand 20.

In step S10 shown in Fig. 6, the CPU 71 acquires the reference information stored in the storage unit 74. The CPU 71 then moves on to step S11.

In step S11, the CPU 71 acquires, as the actual measurement information, the current internal pressure in the actuator main body 42 being measured by the pressure sensor, and the resistance value of the sensor 46 depending on the current internal pressure. The CPU 71 then moves on to step S12.

In step S12, the CPU 71 compares the reference information acquired in step S10 with the actual measurement information acquired in step S11. In a case where the CPU 71 determines that the actual measurement information deviates from the reference information by the predetermined amount (step S12: YES), the CPU 71 moves on to step S13. In a case where the CPU 71 determines that the actual measurement information does not deviate from the reference information by the predetermined amount (step S12: NO), on the other hand, the CPU 71 returns to step S11.

In step S13, the CPU 71 estimates that the fluid pressure actuators 40 have come into contact with the target object. The CPU 71 then moves on to step S14.

In step S14, the CPU 71 determines whether the angle or the information corresponding to the angle changes as the internal pressure in the actuator main body 42 rises. In the embodiment, as an example of the determination, the CPU 71 determines whether the resistance value of the sensor 46 increases with a rise in the internal pressure in the actuator main body 42. In a case where the CPU 71 determines that the resistance value of the sensor 46 does not increase with the rise in the internal pressure in the actuator main body 42 (step S14: YES), the CPU 71 moves on to step S15. In a case where the CPU 71 determines that the resistance value of the sensor 46 increases with the rise in the internal pressure in the actuator main body 42 (step S14: NO), on the other hand, the CPU 71 moves on to step S16.

In step S15, the CPU 71 estimates the hardness of the target object, and estimates that the target object is "hard". The CPU 71 then ends the estimation process.

In step S16, the CPU 71 estimates the hardness of the target object, and estimates that the target object is "soft". The CPU 71 then ends the estimation process.

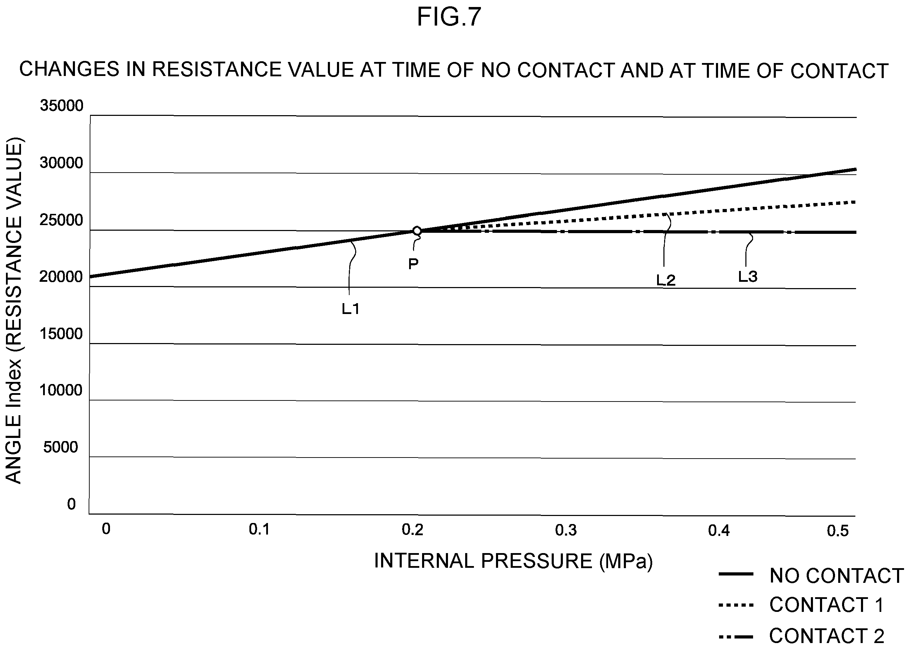

Next, the relationship between the internal pressure in the actuator main body 42 and the resistance value of the sensor 46 is described. Fig. 7 is an explanatory diagram showing the relationship between the internal pressure in the actuator main body 42 and the resistance value of the sensor 46.

Here, the abscissa axis of the graph shown in Fig. 7 indicates the internal pressure (MPa) in the actuator main body 42, and the ordinate axis of the graph indicates the resistance value of the sensor 46. A line L1 indicated by a solid line in the graph indicates the change caused in the resistance value of the sensor 46 by a change in the internal pressure in the actuator main body 42 in a case in which the fluid pressure actuators 40 are not in contact with the target object. In other words, it can be said that the line L1 indicates the degree of bending of the fluid pressure actuators 40 due to the change in the internal pressure in the actuator main body 42 in a case in which the fluid pressure actuators 40 are not in contact with the target object. Further, a line L2 indicated by a dashed line and a line L3 indicated by a dot-and-dash line in the graph indicate the change caused in the resistance value of the sensor 46 by the change in the internal pressure in the actuator main body 42 in a case in which the fluid pressure actuators 40 have come into contact with the target object. In other words, it can be said that the line L2 and the line L3 indicate the degrees of bending of the fluid pressure actuators 40 due to the change in the internal pressure in the actuator main body 42 in a case in which the fluid pressure actuators 40 have come into contact with the target object.

In Fig. 7, the line L1, the line L2, and the line L3 overlap till a point P at which the internal pressure in the actuator main body 42 is from 0 MPa to about 0.2 MPa. This indicates that the degree of bending of the fluid pressure actuators 40 due to the change in the internal pressure in the actuator main body 42 is substantially the same from the point of 0 MPa and the point P in any of the lines.

In Fig. 7, after the internal pressure in the actuator main body 42 becomes higher than the point P, the line L2 and the line L3 separate from the line L1, and the inclinations of the line L2 and the line L3 are smaller than the inclination of the line L1. At this point of time, after the separation from the line L1, the resistance value of the sensor 46 in the line L2 increases with the rise in the internal pressure in the actuator main body 42. This means that the fluid pressure actuators 40 continue to curve, because the fluid pressure actuators 40 push and deform the target object in contact therewith. On the other hand, after the separation from the line L1, the resistance value of the sensor 46 in the line L3 is constant even though the internal pressure in the actuator main body 42 rises. This means that the fluid pressure actuators 40 have stopped curving, because the fluid pressure actuators 40 are no longer able to push and deform the target object in contact therewith.

In view of the above aspects, in the case of the line L2, it can be estimated that the target object is a soft object such as an elastically deformable rubber ball. In the case of the line L3, it can be estimated that the target object is a hard object such as an elastically undeformable iron ball.

As described above, in the contact estimation device 70 according to the embodiment, the CPU 71 acquires the actual measurement information obtained by measuring the degree of bending of the fluid pressure actuators 40 due to a change in the internal pressure in the actuator main body 42. The CPU 71 then compares the acquired actual measurement information with the reference information that specifies beforehand the degree of bending of the fluid pressure actuators 40 due to a change in the internal pressure in the actuator main body 42 in a case in which the fluid pressure actuators 40 are not in contact with the target object, and estimates that the fluid pressure actuators 40 have come into contact with the target object in a case in which the actual measurement information deviates from the reference information by the predetermined amount. In this manner, the contact estimation device 70 can estimate that the fluid pressure actuators 40 have come into contact with the target object. Further, the robot hand 20 according to the embodiment includes a plurality of (four) fluid pressure actuators 40. Accordingly, the contact estimation device 70 can determine whether the robot hand 20 is gripping the target object, by determining whether the plurality of fluid pressure actuators 40 have come into contact with the target object.

Note that, in the embodiment, it is estimated that the fluid pressure actuators 40 have come into contact with the target object in a case in which the actual measurement information deviates from the reference information even by a small amount as the predetermined amount. However, the predetermined amount is not limited to this. For example, in a case in which the actual measurement information deviates from the reference information at least by an amount equivalent to a predetermined region as the predetermined amount, it may be estimated that the fluid pressure actuators 40 have come into contact with the target object.

Further, in the contact estimation device 70 according to the embodiment, the CPU 71 estimates the hardness of the target object in accordance with the degree of deviation of the actual measurement information from the reference information. In this manner, the contact estimation device 70 can estimate the hardness of the target object with which the fluid pressure actuators 40 have come into contact.

### (Others)

In the embodiment, the contact estimation device 70 is a PC, and the contact estimation device 70 is provided in a configuration different from that of the robot arm 10 in the contact estimation system 100. However, the invention is not limited to this. The contact estimation device 70 may be a microcomputer, and the microcomputer may be mounted on the robot hand 20.

In the embodiment, the degree of bending of the fluid pressure actuators 40 is measured with the sensor 46 serving as a bend sensor. However, as long as the degree of bending of the fluid pressure actuators 40 can be measured, the sensor 46 is not necessarily a bend sensor, but may be some other sensor or a combination of sensors, such as a bend sensor and some other sensor. Further, as a component that measures the degree of bending of the fluid pressure actuators 40, a camera may be provided in place of or in addition to the sensor. In this case, the degree of bending of the fluid pressure actuators 40 can be measured on the basis of an image captured by the camera.

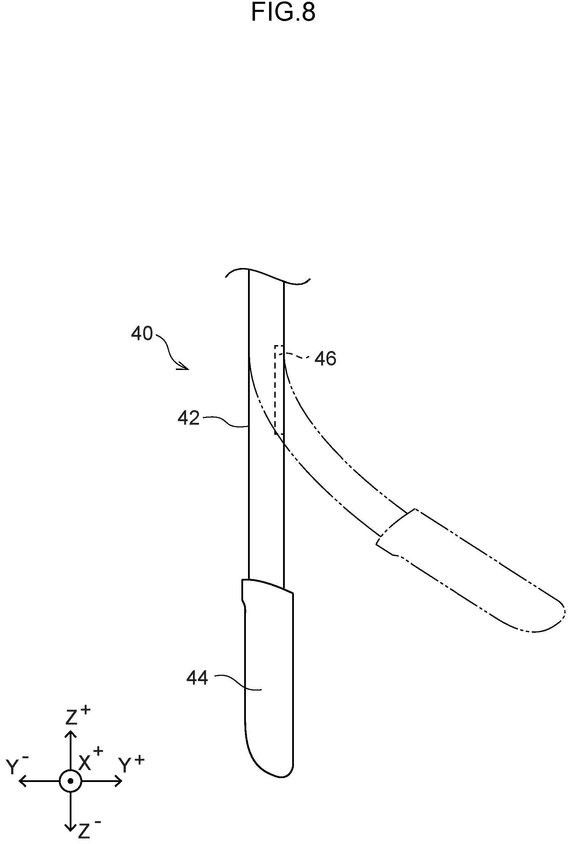

Although the sensor 46 is provided on the back side in the actuator main body 42 (see Fig. 2) in the embodiment, the installation position of the sensor 46 in each fluid pressure actuator 40 is not limited to this. Fig. 8 is a second explanatory view for explaining a fluid pressure actuator 40 according to the embodiment. As shown in Fig. 8, the sensor 46 may be provided on the front side in the actuator main body 42.

In the embodiment, the contact estimation device 70 may provide information indicating the type of estimated hardness of the target object to the outside. This allows adjustment of the gripping force of the robot hand 20 based on the provided information.

Note that the estimation process performed by the CPU 71 reading software (a program) in the embodiment may be performed by various processors other than a CPU. Examples of the processor in this case include a programmable logic device (PLD) in which the circuit configuration can be changed after manufacturing, such as a field-programmable gate array (FPGA), and a dedicated electric circuit that is a processor having a circuit configuration designed exclusively for performing specific processing, such as an application specific integrated circuit (ASIC). Further, the estimation process may be performed by one of these various processors, or by a combination of two or more processors of the same type or different types (for example, a plurality of FPGAs, a combination of a CPU and an FPGA, or the like).

More specifically, the hardware structure of any of these various processors is an electric circuit in which circuit elements such as semiconductor elements are combined.

In the embodiment, the aspect in which the contact estimation program 74A is stored (installed) beforehand into the storage unit 74 has been described, but the invention is not limited to this. The contact estimation program 74A may be provided in a form recorded in a recording medium such as a compact disk read only memory (CD-ROM), a digital versatile disk read only memory (DVD-ROM), or a universal serial bus (USB) memory. Alternatively, the contact estimation program 74A may be downloaded from an external device via a network.

### Contribution to U.N.-initiated sustainable development goals (SDGs)

SDGs have been proposed to realize a sustainable society. An embodiment of the disclosure is considered to be a technology that contributes to "#9_Make the basis of industry and technological innovation" and the like.

The entire contents of the disclosure of Japanese Patent Application No. 2022-198948 are incorporated herein by reference.

All literatures, patent applications, and technical standards mentioned in this specification are incorporated herein by reference to the same extent as that in a case where each literature, each patent application, and each technical standard are specifically and individually mentioned to be incorporated by reference.

## Claims

1. A contact estimation method by which a computer performs processing comprising:
acquiring actual measurement information obtained by measuring a degree of bending of a fluid pressure actuator due to a change in pressure inside the fluid pressure actuator, the fluid pressure actuator being bendable based on an inflow of a fluid; and
comparing the acquired actual measurement information with reference information that specifies beforehand the degree of bending due to the change in pressure in a case in which the fluid pressure actuator is not in contact with a target object, and estimating that the fluid pressure actuator has come into contact with the target object in a case in which the actual measurement information deviates from the reference information by a predetermined amount.

2. The contact estimation method according to claim 1, wherein the computer further performs processing of:
estimating a hardness of the target object in accordance with a degree of deviation of the actual measurement information deviating from the reference information.

3. A contact estimation program for causing a computer to perform processing comprising:
acquiring actual measurement information obtained by measuring a degree of bending of a fluid pressure actuator due to a change in pressure inside the fluid pressure actuator, the fluid pressure actuator being bendable based on an inflow of a fluid; and
comparing the acquired actual measurement information with reference information that specifies beforehand the degree of bending due to the change in pressure in a case in which the fluid pressure actuator is not in contact with a target object, and estimating that the fluid pressure actuator has come into contact with the target object in a case in which the actual measurement information deviates from the reference information by a predetermined amount.

4. A contact estimation device, comprising:
an acquisition unit that acquires actual measurement information obtained by measuring a degree of bending of a fluid pressure actuator due to a change in pressure inside the fluid pressure actuator, the fluid pressure actuator being bendable based on an inflow of a fluid; and
an estimation unit that compares the acquired actual measurement information with reference information that specifies beforehand the degree of bending due to the change in pressure in a case in which the fluid pressure actuator is not in contact with a target object, and estimates that the fluid pressure actuator has come into contact with the target object in a case in which the actual measurement information deviates from the reference information by a predetermined amount.
